# FASCICULE DE BREVET EUROPEEN

(11) **EP 2 371 515 B1**
(45) Date de publication et mention de la délivrance du brevet: **01.07.2015**
(21) Numéro de dépôt: 11305384.7
(22) Date de dépôt: 01.04.2011
(51) Int. Cl.: B29C 45/14, B29C 45/00, B29L 31/30, B29K 705/00

(54) **PROCEDE DE FABRICATION D'UNE PIECE STRUCTURELLE DE VEHICULE AUTOMOBILE PAR SURMOULAGE**
VERFAHREN ZUR HERSTELLUNG EINES STRUKTURBAUTEILS FÜR EIN AUTOMOBIL DURCH UMSPRITZEN
METHOD OF MANUFACTURING A STRUCTURAL PART FOR AN AUTOMOBILE BY INSERT MOULDING

(30) Priorité: 02.04.2010 FR 1052530
(43) Date de publication de la demande: 05.10.2011
(73) Titulaire: Faurecia Bloc Avant, 92000 Nanterre (FR)
(72) Inventeur: Menard, Magalie, 90200 Auxelles Haut (FR); Buron, Marie-Pierre, 25260 Montenois (FR); Steinmetz, Abla, 25310 Herimoncourt (FR)
(74) Mandataire: Domenego, Bertrand

(56) Documents cités:
- EP-A1- 1 726 423
- JP-A- 2004 255 802
- AL-SHEYYAB A ET AL: "Kurzer Prozess bei hybriden Strukturen", KUNSTSTOFFE, CARL HANSER VERLAG, MUNCHEN, DE, no. 12, 1 décembre 2007 (2007-12-01), pages 120-124, XP008089369, ISSN: 0023-5563
- PONGRATZ S ET AL: "ES MUSS NICHT IMMER STAHL SEIN", KUNSTSTOFFE, CARL HANSER VERLAG, MUNCHEN, DE, 1 juillet 2004 (2004-07-01), pages 106-110, XP001203512, ISSN: 0023-5563

## Description

La présente invention concerne un procédé de fabrication d'une pièce structurelle de véhicule automobile.

Dans un véhicule automobile, certaines pièces, notamment les pièces de structure, sont soumises à des contraintes importantes. Il est donc utile de fabriquer des pièces de structure renforcées aptes à résister à ces contraintes.

Il est possible de fabriquer de telles pièces renforcées en surmoulant un premier corps comportant une matrice et des fibres de renfort à l'aide d'un deuxième corps. Pour obtenir la cohésion entre le premier corps et le deuxième corps, il est connu de préchauffer le premier corps dans un four à rayonnement infrarouge, puis de transférer le premier corps préchauffé dans le moule d'injection à l'aide d'un robot préhenseur et enfin de le surmouler par injection de façon à former le deuxième corps.

A l'issue de l'étape de chauffage par infrarouge du premier corps, le premier corps, initialement rigide, est souple et, par conséquent, susceptible de se déformer. La perte de raideur du premier corps induite par le préchauffage limite l'utilisation de premiers corps de géométries complexes, ainsi que leur positionnement précis dans le moule d'injection.

Les articles Sheyyab A et al : « Kurzer Prozess bei Hybridstrukturen », Kunststoffe, Carl Hanser Verlag, München, no. 12/2007, pages 120 à 124 et Pongratz S et Al : « Es muss nicht immer Stahl sein » Kunststoffe, Carl Hanser Verlag, München, n° 7/2004, pages 106 à 110 décrivent des procédés de fabrication de pièces composites en matière plastique. EP-A1-1 726 423 décrit un procédé de moulage de palier d'élastomère sur une barre stabilisatrice.

Un but de la présente invention est de proposer un procédé de fabrication de pièces structurelles de véhicules automobiles qui est plus simple à mettre en oeuvre que les procédés connus et qui permet d'utiliser des premiers corps de géométrie complexe.

A cet effet, l'invention propose un procédé de fabrication selon la revendication 1 d'une pièce structurelle de véhicule automobile.

Selon d'autres modes de mise en oeuvre, le procédé comprend une ou plusieurs des caractéristiques des revendications 2 à 8.

L'invention sera mieux comprise à la lecture de la description qui va suivre, donnée uniquement à titre d'exemple et faite en se référant aux dessins annexés, sur lesquels :
- la figure 1 est une vue en perspective d'une pièce obtenue par le procédé selon l'invention ;
- la figure 2 est une vue en section transversale d'un moule adapté pour l'obtention de la pièce de la figure 1, comportant la pièce de la figure 1 ;
- la figure 3 est une vue de dessus d'une variante de la pièce obtenue par le procédé selon l'invention ; et
- la figure 4 est une vue en coupe selon IV-IV de la pièce de la figure 3.

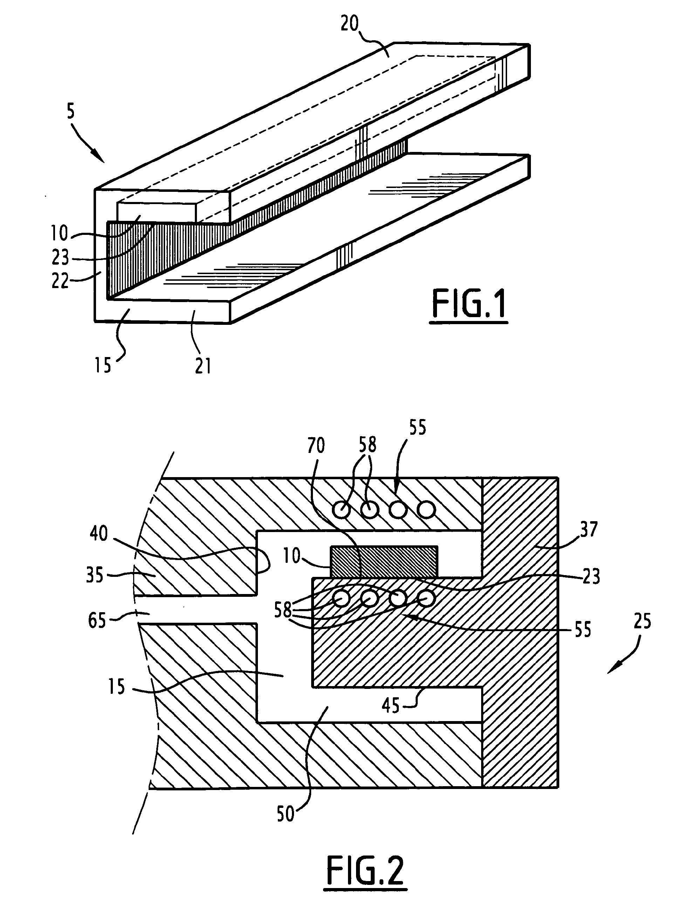

La pièce 5 représentée sur la figure 1 est une pièce structurelle de véhicule automobile. Il s'agit par exemple d'une traverse de face avant de véhicule automobile ou d'un support d'optique.

La pièce 5 est un composite et comprend un premier corps 10 surmoulé par un deuxième corps 15.

Dans le mode de réalisation de la figure 1, la pièce 5 présente la forme générale d'un profilé à section transversale en U. Le deuxième corps 15 présente une section transversale en U, formée par une première aile 20 et une deuxième aile 21 sensiblement parallèles entre elles et une âme 22 sensiblement perpendiculaire aux ailes 20 et 21. Le premier corps 10 est intégré dans la première aile 20 du deuxième corps 15. Une surface 23 du premier corps 10 affleure la face interne de la première aile 20.

L'épaisseur du premier corps 10 est de préférence comprise entre 0,5mm et 4mm.

Le deuxième corps 15 recouvre sensiblement toutes les surfaces du premier corps 10, à l'exception de la surface intérieure 23. Selon des variantes, le deuxième corps 15 ne recouvre que partiellement les surfaces du premier corps 10. Ainsi, le deuxième corps 15 forme par exemple des nervures sur le premier corps 10.

Le premier corps 10 est réalisé en matériau composite à renfort de fibres. Il comprend une première matrice réalisée dans une première matière thermoplastique et renforcée par des fibres de renfort noyées dans la première matrice.

Les fibres de renfort sont notamment des fibres de verre, de carbone, de basalte ou des fibres végétales. La première matière thermoplastique est notamment choisie parmi les matières suivantes : polypropylène (PP), polyamide (PA), téréphtalate de polybutylène (PBT) ou polyéthylène téréphtalate (PET).

Les fibres de renfort sont de préférence orientées. Elles sont par exemple orientées de manière unidirectionnelle ou bidirectionnelle au sein de la première matrice. La présence de fibres de renfort orientées présente notamment l'avantage d'augmenter la résistance de la pièce 5 dans la ou les directions des fibres. Dans le cas où les fibres de renfort sont orientées de manière unidirectionnelle, elles sont par exemple orientées parallèlement à une direction d'allongement du premier corps 10.

Dans le cas où les fibres de renfort sont orientées, elles sont avantageusement continues, c'est-à-dire que chaque fibre de renfort orientée selon une certaine direction a une longueur correspondant sensiblement à la dimension du corps 10 selon cette direction.

Le deuxième corps 15 comprend une deuxième matrice réalisée dans une deuxième matière thermoplastique. La deuxième matière thermoplastique est par exemple choisie parmi les matières suivantes : polypropylène (PP), polyamide (PA), téréphtalate de polybutylène (PBT) ou polyéthylène téréphtalate (PET).

La première et la deuxième matières thermoplastiques sont des matières chimiquement compatibles, c'est-à-dire susceptibles d'adhérer l'une à l'autre au sein de la pièce 5 de manière à ce qu'une liaison chimique et mécanique solide soit formée entre le premier corps 10 et le deuxième corps 15 et qu'ainsi, une pièce 5 présentant une bonne cohésion et apte à résister à la délamination soit formée.

De préférence, la première et la deuxième matières thermoplastiques sont identiques.

En option, le deuxième corps 15 peut comporter en outre des fibres de renfort, noyées dans la deuxième matrice. Ces fibres peuvent être choisies parmi les mêmes matières que les fibres de renfort de la première matrice. Ces fibres sont de préférence plus courtes que les fibres de renfort de la première matrice. Elles ont avantageusement une longueur comprise entre 2 et 10 mm. En outre, les fibres de renfort de la deuxième matrice sont avantageusement discontinues, c'est-à-dire que leur longueur est inférieure à la dimension de la pièce 5 dans la direction dans laquelle elles s'étendent.

En option, des éléments métalliques sont noyés dans la première matrice. Ces éléments métalliques sont par exemple des fibres ou des particules métalliques. Les éléments métalliques sont par exemple réalisés dans une matière ferromagnétique, par exemple dans un acier ferromagnétique. La quantité d'éléments métalliques présents dans le premier corps 10 est choisie de manière à ne pas trop alourdir le premier corps 10. La quantité d'éléments métalliques est notamment inférieure à la quantité de fibres de renfort. Le taux d'éléments métalliques dans la première matrice est avantageusement inférieur à 5% en masse.

Le procédé de fabrication de la pièce 5 va maintenant être décrit en référence à la figure 2.

Sur la figure 2 est représenté un moule 25 de moulage par injection adapté pour la fabrication de la pièce 5 selon l'invention. Le moule 25 de moulage par injection comprend un premier demi-moule 35 et un deuxième demi-moule 37 complémentaires et mobiles l'un par rapport à l'autre pour ouvrir le moule 25 par écartement des premier et deuxième demi-moules 35, 37 et fermer le moule 25 par rapprochement des premier et deuxième demi-moules 35, 37. Les premier et deuxième demi-moules 35, 37 comprennent respectivement des surfaces 40, 45 en regard définissant entre elles une cavité 50 de réception du premier corps 10 et de surmoulage du deuxième corps 15 lorsque le moule 25 est fermé.

Le moule 25 comprend en outre des moyens de chauffage par induction 55 aptes à chauffer les surfaces 40 et/ou 45 des premier et deuxième demi-moules 35, 37.

La fonction des moyens de chauffage par induction 55 est de chauffer les surfaces 40 et/ou 45 du moule 25 par induction et le premier corps 10 par conduction et/ou par rayonnement. Les moyens de chauffage 55 sont propres à chauffer le premier corps 10 jusqu'à ce qu'il atteigne une température T_{R} adaptée pour engendrer une bonne cohésion entre le premier corps 10 et le deuxième corps 15. Cette température T_{R} est en particulier supérieure à la température de fusion de la première matière thermoplastique et de préférence supérieure d'au moins 40°C à la température de fusion de la première matière thermoplastique.

La température T_{R} est par exemple de l'ordre de 250°C pour un premier corps 10 constitué d'une première matrice en polyamide (PA) dans laquelle sont noyées des fibres de renfort et de l'ordre de 200°C pour un premier corps 10 comprenant une première matrice en polypropylène (PP).

Les moyens de chauffage par induction 55 comprennent des inducteurs électromagnétiques 58 aptes à générer un champ électromagnétique variable dans le premier demi-moule 35 et/ou dans le deuxième demi-moule 37, induisant ainsi la circulation de courants induits, dits de Foucault, le long des surfaces 40 et/ou 45. Les inducteurs 58 sont alimentés par un générateur (non représenté), disposé par exemple à l'extérieur du moule 25.

De manière classique, le moule 25 comprend en outre un dispositif de refroidissement (non représenté) adapté pour réguler la température des premier et deuxième demi-moules 35, 37. Le dispositif de refroidissement comprend notamment des canaux de circulation d'un fluide de refroidissement traversant les premier et deuxième demi-moules 35, 37.

Le moule 25 comprend également des canaux d'amenée 65 pour injecter la deuxième matière thermoplastique dans la cavité 50. Les canaux d'amenée 65 sont agencés de manière à injecter la deuxième matière thermoplastique dans la cavité 50 à l'endroit adéquat en fonction de la géométrie souhaitée du deuxième corps 15 et de la pièce 5. Les surfaces 40, 45 des premier et deuxième demi-moules 35, 37 présentent des reliefs complémentaires de la géométrie souhaitée du deuxième corps 15.

Le moule 25 comprend en outre, au sein de la surface 40 et/ou 45 une zone de réception 70 du premier corps 10. La localisation dans le moule 25 de cette zone de réception 70 dépend de l'agencement souhaité du premier corps 10 par rapport au deuxième corps 15 dans la pièce 5.

En option, le moule 25 comprend, dans la zone de réception 70, des pions de retenue (non représentés), propres à assurer le positionnement et la retenue du corps 10 dans la zone de réception 70. Ces pions de retenue font par exemple saillie dans la cavité 50 à partir de la zone de réception 70. Dans ce cas, le corps 10 comprend, dans des zones participant peu à la tenue mécanique de la pièce 5, des orifices de retenue de forme complémentaire aux pions de retenue. Ces orifices de retenue sont aptes à être engagés sur les pions de retenue de la zone de réception 70. La présence de tels pions de retenue est notamment utile lorsque la zone de réception 70 est orientée de telle sorte que le corps 10 quitte sa position sur la zone de réception 70 sous l'effet de la gravité.

Le procédé de fabrication de la pièce 5 va maintenant être expliqué.

Dans une étape (a), le premier corps 10 est fourni à température ambiante.

Dans une étape (b) de positionnement du premier corps 10, le moule 25 est ouvert par écartement des demi-moules 35, 37 et le premier corps 10 est transféré à température ambiante dans le moule 25 et positionné dans la zone de réception 70.

Dans ce contexte, « à température ambiante » signifie que le premier corps 10 est manipulé à la température du local dans lequel s'effectue le procédé et qu'il ne subit pas, avant sa mise en place dans le moule 25, de préchauffage ou de chauffage en vue de faciliter son adhésion au deuxième corps 15. Le premier corps 10 à température ambiante est autoportant et conserve sa forme.

Le premier corps 10 est fourni et transféré dans le moule en ayant la forme déterminée finale qu'il possède dans la pièce 5. Le premier corps 10 ne subit pas de mise en forme dans le moule 25. Si nécessaire, le premier corps 10 est mis en forme préalablement à l'étape (a).

Dans une étape (c) de chauffage par induction, les moyens de chauffage par induction 55 sont activés, le moule 25 ayant préalablement été fermé par rapprochement des demi-moules 35, 37 et chauffent les surfaces 40 et/ou 45 par induction jusqu'à une température adaptée pour engendrer un chauffage du premier corps 10 jusqu'à la température T_{R}. Le chauffage est en particulier adapté pour engendrer un chauffage homogène de premiers corps 10 d'épaisseur importante, par exemple d'épaisseur supérieure à 1 mm.

Du fait du chauffage des surfaces 40 et/ou 45, le premier corps 10 est chauffé jusqu'à la température T_{R} par conduction et/ou par rayonnement de la chaleur depuis les surfaces 40, 45.

Dans le cas optionnel où le premier corps 10 comprend des éléments métalliques, les moyens de chauffage par induction 55 induisent la circulation de courants induits dans ces éléments métalliques et ainsi leur chauffage par effet Joule. Les éléments métalliques ainsi chauffés participent alors au chauffage du premier corps 10 dans la masse. La fonction des éléments métalliques est ainsi d'accélérer le chauffage du premier corps 10 jusqu'à la température T_{R}.

Lorsque le premier corps 10 a atteint la température T_{R}, le chauffage par induction est arrêté. L'étape (c) de chauffage dure avantageusement entre 5 et 15 secondes.

Dans une étape (d) d'injection, la deuxième matière thermoplastique est injectée à une pression d'injection dans la cavité 50 par l'intermédiaire des canaux d'amenée 65 à l'aide d'un dispositif d'injection (non représenté). Cette étape (d) d'injection dure par exemple entre 4 et 5 secondes.

L'étape (d) d'injection est suivie d'une étape (e) de maintien, au cours de laquelle la deuxième matière thermoplastique est injectée à une pression de maintien inférieure à la pression d'injection de manière à compenser la contraction au cours de son refroidissement de la deuxième matière thermoplastique injectée dans la cavité 50 du moule 25. L'étape (e) de maintien dure avantageusement environ 3 secondes.

Dans une étape (f) de refroidissement, la pièce 5 est refroidie, notamment à l'aide du dispositif de refroidissement, qui refroidit les surfaces 40, 45 des premier et deuxième demi-moules 35, 37. La fonction de cette étape de refroidissement est d'assurer un refroidissement suffisant de la pièce 5 avant démoulage pour obtenir une bonne cohésion entre le premier corps 10 et le deuxième corps 15 et permettre la manipulation de la pièce 5, par exemple par un robot préhenseur, sans risque de déformation. L'étape (f) de refroidissement dure par exemple entre environ 20 et 25 secondes.

Enfin, le moule 25 est ouvert par écartement des premier et deuxième demi-moules 35, 37 et la pièce 5 est démoulée.

Selon une variante du procédé selon l'invention, le chauffage par induction est poursuivi pendant l'étape (d) d'injection.

La poursuite du chauffage pendant l'étape (d) d'injection permet de prévoir un deuxième corps 15 plus fin. Elle améliore également l'interpénétration des première et deuxième matières thermoplastiques et ainsi la cohésion entre le deuxième corps 15 et le premier corps 10.

La poursuite du chauffage pendant l'étape (d) est également avantageuse lorsque la deuxième matière thermoplastique est peu fluide. Le polyetheréthercétone (PEEK) et le polyéthylénimine (PEI) sont des exemples de deuxièmes matières thermoplastiques peu fluides.

La présente invention présente les avantages suivants.

Le procédé selon l'invention permet de réaliser des pièces comportant des premiers corps à géométrie complexe et notamment à géométrie plus complexe que dans le cas où le premier corps est préchauffé préalablement à son positionnement dans le moule. En effet, le procédé selon l'invention ne comporte pas d'étape de transport du premier corps préchauffé et donc souple entre un moyen de préchauffage et le moule.

Le positionnement du premier corps dans le moule est facilité en raison du fait que le premier corps est à température ambiante et donc à l'état rigide au moment de son placement dans le moule et non à l'état préchauffé souple. Ainsi, le positionnement du premier corps dans le moule peut se faire de manière plus précise.

De plus, le chauffage du premier corps directement dans le moule sans préchauffage préalable évite un refroidissement du premier corps pendant son transport.

Dans le cas où le premier corps comporte des éléments métalliques, le temps de cycle est diminué.

La présence de fibres de renfort courtes et discontinues dans la deuxième matrice renforce le deuxième corps, tout en autorisant le moulage, en particulier par injection, du deuxième corps. Le procédé permet ainsi de combiner un premier corps renforcé de fibres longues avec un deuxième corps à fibres courtes pouvant présenter une géométrie plus complexe.

L'invention n'est pas limitée au moulage par injection du deuxième corps. Ainsi, en variante, le deuxième corps peut être moulé sur le premier corps par thermocompression.

Dans le premier mode de réalisation de la pièce 5, décrit en référence à la figure 1, le deuxième corps 15 présente une section transversale en U et le premier corps 10 est intégré dans la première aile 20 du deuxième corps 15. Le premier corps 10 a pour fonction de renforcer la pièce 5, notamment selon la direction des fibres de renfort.

La forme de la pièce structurelle n'est pas limitée à celle illustrée dans le premier mode de réalisation. Le premier corps et le deuxième corps peuvent être prévus avec différentes géométries permettant leur coopération pour obtenir une pièce structurelle de résistance suffisante et de géométrie adaptée.

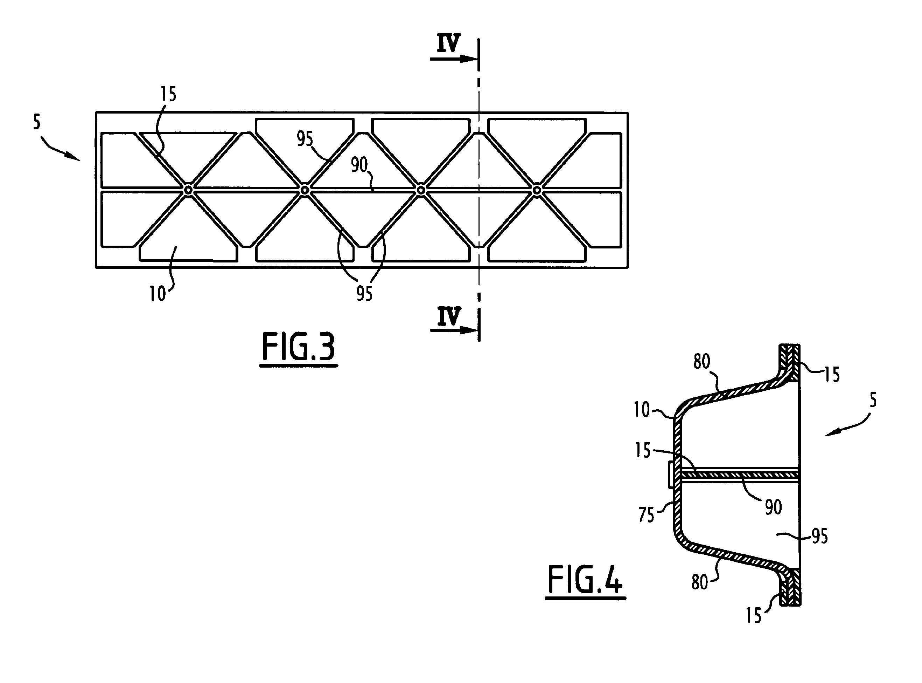

Ainsi, le premier corps 10 peut présenter une forme tridimensionnelle. Selon une variante, représentée sur les figures 3 et 4, le premier corps 10 présente la forme d'un profilé à section transversale en U, formée d'une âme 75 et de deux ailes 80. Le deuxième corps 15 forme un ensemble de nervures de renfort s'étendant à l'intérieur du premier corps 10 entre les ailes 80. L'ensemble de nervures de renfort comprend une nervure centrale 90, orientée parallèlement à la direction d'allongement de l'âme 75 et des nervures inclinées 95 s'étendant entre la nervure centrale 90 et les ailes 80. L'ensemble de nervures forme deux séries de caissons triangulaires dont la base est en alternance formée par la nervure centrale 90 et une aile 80. Le deuxième corps 15 recouvre en outre les extrémités des ailes 80 opposées à l'âme 75 de manière à les renforcer.

Dans cette variante, le deuxième corps 15 renforce le premier corps 10. Une partie importante de la surface extérieure du premier corps 10 est laissée découverte par le deuxième corps 15. Le premier corps 10 est fourni à l'étape (a) du procédé selon l'invention avec sa forme en profilé à section en U. A cette fin, le premier corps 10 peut être mis en forme préalablement à l'étape (a) ou fabriqué directement avec cette forme.

## Revendications

1. Procédé de fabrication d'une pièce structurelle de véhicule automobile, la pièce comprenant un premier corps comprenant une première matrice réalisée dans une première matière thermoplastique renforcée par des fibres, surmoulé par un deuxième corps comprenant une deuxième matrice réalisée dans une deuxième matière thermoplastique, le procédé comportant les étapes consistant à :
(a) fournir le premier corps (10),
(b) transférer le premier corps (10) à température ambiante dans un moule (25),
(c) chauffer le moule (25) par induction à l'aide de moyens de chauffage par induction (55) de manière à chauffer le premier corps (10) dans le moule (25),
(d) mouler dans le moule (25) le deuxième corps (15) de manière à surmouler le premier corps (10) en le recouvrant au moins partiellement.

2. Procédé selon la revendication 1, **caractérisé en ce que** dans l'étape (c) de chauffage du moule (25), le moule (25) est chauffé par induction jusqu'à atteindre une température du premier corps (10) adaptée pour obtenir une bonne cohésion entre le premier corps (10) et le deuxième corps (15), notamment une température supérieure à la température de fusion de la première matière thermoplastique et de préférence supérieure d'au moins 40°C à la température de fusion de la première matière thermoplastique.

3. Procédé selon la revendication 1 ou 2, **caractérisé en ce que** le premier corps (10) comprend en outre des éléments métalliques noyés dans la matrice du premier corps (10), les éléments métalliques étant notamment sous la forme de fibres ou de particules.

4. Procédé selon l'une quelconque des revendications 1 à 3, **caractérisé en ce que** le premier corps (10) présente une épaisseur comprise entre 0,5 et 4 mm.

5. Procédé selon l'une quelconque des revendications 1 à 4, **caractérisé en ce que** les fibres de renfort sont continues et orientées de manière unidirectionnelle ou bidirectionnelle.

6. Procédé selon l'une quelconque des revendications 1 à 5, **caractérisé en ce que** la première matière thermoplastique et la deuxième matière thermoplastique sont chimiquement compatibles, par exemple identiques.

7. Procédé selon l'une quelconque des revendications 1 à 6, **caractérisé en ce que** la deuxième matrice est chargée de fibres de renfort.

8. Procédé selon la revendication 7, **caractérisé en ce que** les fibres de renfort de la première matrice sont longues et les fibres de renfort de la deuxième matrice sont courtes.

## Patentansprüche

1. Verfahren zum Herstellen eines strukturellen Teils eines Kraftfahrzeugs, wobei das Teil einen ersten Körper aufweist, der eine erste Matrix aufweist, die in einem ersten von Fasern verstärkten thermoplastischen Material realisiert ist, und der von einem zweiten Körper umformt ist, der eine zweite Matrix aufweist, die in einem zweiten thermoplastischen Material realisiert ist, wobei das Verfahren die Schritte aufweist, bestehend aus:
(a) Bereitstellen des ersten Körpers (10),
(b) Überführen des ersten Körpers (10) bei Umgebungstemperatur in eine Form (25),
(c) Beheizen der Form (25) durch Induktion mittels Induktions-Heizmitteln (55) zum Erwärmen des ersten Körpers (10) in der Form (25),
(d) Formen des zweiten Körpers (15) in der Form (25) in einer Weise zum Überformen des ersten Körpers (10) unter wenigstens teilweise Bedecken desselben.

2. Verfahren gemäß Anspruch 1, **dadurch gekennzeichnet, dass** im Schritt (c) des Beheizens der Form (25) die Form (25) mittels Induktion beheizt wird bis zum Erreichen einer Temperatur des ersten Körpers (10), die angepasst ist zum Erhalten einer guten Kohäsion zwischen dem ersten Körper (10) und dem zweiten Körper (15), insbesondere einer Temperatur, die größer ist als die Fusionstemperatur des ersten thermoplastischen Materials und bevorzugt wenigstens 40°C größer ist als die Fusionstemperatur des ersten thermoplastischen Materials.

3. Verfahren gemäß Anspruch 1 oder 2, **dadurch gekennzeichnet, dass** der erste Körper (10) ferner metallische Elemente aufweist, die in die Matrix des ersten Körpers (10) eingebettet sind, wobei die metallischen Elemente insbesondere in Form von Fasern oder Partikeln sind.

4. Verfahren gemäß irgendeinem der Ansprüche 1 bis 3, **dadurch gekennzeichnet, dass** der erste Körper (10) eine Dicke aufweist, die zwischen 0,5 und 4mm liegt.

5. Verfahren gemäß irgendeinem der Ansprüche 1 bis 4, **dadurch gekennzeichnet, dass** die Verstärkungsfasern kontinuierlich und unidirektional oder bidirektional orientiert sind.

6. Verfahren gemäß irgendeinem der Ansprüche 1 bis 5, **dadurch gekennzeichnet, dass** das erste thermoplastische Material und das zweite thermoplastische Material chemisch kompatibel, z.B. identisch, sind.

7. Verfahren gemäß irgendeinem der Ansprüche 1 bis 6, **dadurch gekennzeichnet, dass** die zweite Matrix mit Verstärkungsfasern bestückt ist.

8. Verfahren gemäß Anspruch 7, **dadurch gekennzeichnet, dass** die Verstärkungsfasern der ersten Matrix lang sind und dass die Verstärkungsfasern der zweiten Matrix kurz sind.

## Claims

1. Method for manufacturing a structural part for a motor vehicle, wherein the part comprises a first body comprising a first matrix made from a first fibre-reinforced thermoplastic material overmoulded by a second body comprising a second matrix made from a second thermoplastic material, said method comprising the following steps:
(a) supplying the first body (10),
(b) transferring the first body (10) at ambient temperature into a mould (25),
(c) heating the mould (25) by induction by means of induction heating devices (55) in order to heat the first body (10) in the mould (25),
(d) moulding the second body (15) in the mould (25) in order to overmould the first body (10) to cover it at least partially.

2. Method according to claim 1, **characterised in that** in step (c) of heating the mould (25), the mould (25) is heated by induction until a suitable temperature of the first body (10) is reached to obtain a good cohesion between the first body (10) and the second body (15), in particular a temperature higher than the melting temperature of the first thermoplastic material and preferably at least 40°C higher than the melting temperature of the first thermoplastic material.

3. Method according to claim 1 or 2, **characterised in that** the first body (10) additionally comprises metal elements embedded in the matrix of the first body (10), said metal elements in particular being in the form of fibres or particles.

4. Method according to any one of claims 1 to 3, **characterised in that** the first body (10) has a thickness in the range of between 0.5 and 4 mm.

5. Method according to any one of claims 1 to 4, **characterised in that** the reinforcing fibres are continuous and oriented unidirectionally or bidirectionally.

6. Method according to any one of claims 1 to 5, **characterised in that** the first thermoplastic material and the second thermoplastic material are chemically compatible, e.g. identical.

7. Method according to any one of claims 1 to 6, **characterised in that** the second matrix is laden with reinforcing fibres.

8. Method according to claim 7, **characterised in that** the reinforcing fibres of the first matrix are long and the reinforcing fibres of the second matrix are short.
